# EUROPÄISCHE PATENTSCHRIFT

(11) **EP 1 564 060 B1**
(45) Veröffentlichungstag und Bekanntmachung des Hinweises auf die Patenterteilung: **29.04.2009**
(21) Anmeldenummer: 05003111.1
(22) Anmeldetag: 14.02.2005
(51) Int. Cl.: B60K 25/06, B60P 1/60, F01N 1/08

(54) **Versorgungsaggregateanordnung für ein Kraftfahrzeug**
Supply unit arrangement for a motor vehicle
Disposition d'une unité auxiliaire pour un véhicule à moteur

(30) Priorität: 13.02.2004 DE 202004002341 U
(43) Veröffentlichungstag der Anmeldung: 17.08.2005
(73) Patentinhaber: Ponte Vecchio Consult Sagl, 6600 Muralto (CH)
(72) Erfinder: Schübler, Hans Hubert, 45479 Mülheim a.d.R. (DE)
(74) Vertreter: UEXKÜLL & STOLBERG

(56) Entgegenhaltungen:
- EP-A- 1 065 100
- DE-U- 9 413 878
- DE-U- 20 306 017
- GB-A- 753 197
- GB-A- 950 780
- US-A- 4 227 893
- US-A- 4 273 477

## Beschreibung

Die Erfindung betrifft ein Kraftfahrzeug mit einem Getriebe, mit den Merkmalen des Oberbegriffs des Anspruchs 1.

Lastkraftwagen müssen neben den für Kraftfahrzeugen allgemein üblichen Vorrichtungen häufig noch mit Versorgungsaggregaten wie etwa Kompressoren, Pumpen, Hydraulikpumpen oder Generatoren ausgerüstet werden. Derartige Vorrichtungen sind beispielsweise für das Be- und Entladen von Lastkraftwagen notwendig, beispielsweise bei Silofahrzeugen oder Sattelzugmaschinen, die Siloauflieger ziehen, und werden bevorzugt vom Motor des Lastkraftwagens mechanisch angetrieben. Ansonsten wäre ein weiterer Motor erforderlich. Ein solcher zusätzlicher Motor hätte erhöhte Kosten zur Folge und würde durch sein Eigengewicht das maximal zuladbare Gewicht reduzieren. Daher ist eine Lösung, die einen weiteren Motor zum Antrieb des Versorgungsaggregats benötigt, wirtschaftlich nicht sinnvoll.

Insbesondere bei Sattelschleppern ergibt sich das Problem, dass der Raum an dem Chassis der Zugmaschine für das Anbringen von Versorgungsaggregaten eng begrenzt ist. Der Raum oberhalb des Chassis hinter der Fahrerkabine der Zugmaschine wird vom Auflieger eingenommen, so dass an dieser Stelle keine Versorgungsaggregate angebracht werden können.

Der einzig verbleibende Raum ist demnach der außerhalb des Chassis zwischen der Vorder- und der Hinterachse. Ein besonderes Platzproblem besteht allerdings an Fahrzeugen mit kurzen Radständen oder solchen, die rechts und links des Chassisrahmens mit Kraftstofftanks versehen sind, die jeweils zwischen dem entsprechenden Vorder- und Hinterrad angeordnet sind.

Verstärkt wird das Platzproblem, wenn die Hinterachse der Zugmaschine als Zwillingsachse ausgeführt ist, was der Fall ist, wenn das zulässige Gesamtgewicht des Sattelzuges bei über 40 t liegt. Dann verringert sich der zwischen den Achsen zur Verfügung stehenden Raum weiter, da in einem solchen Fall die Gesamtlänge der Zugmaschine nahezu unverändert bleibt.

Der Antrieb der Versorgungsaggregate erfolgt in der Regel in der Weise, dass das Versorgungsaggregat eine Gelenkwelle aufweist, die mit einem Nebenabtrieb des Getriebes verbunden ist. Eine solche Gelenkwelle ist unter anderem deswegen erforderlich, um einerseits das Versorgungsaggregat schwingungstechnisch von dem Rest des Fahrzeuges zu entkoppeln und andererseits eine vergleichsweise einfache Montage bzw. Demontage des Versorgungsaggregats zu ermöglichen. Neben dem Versorgungsaggregat muss also auch genügend Raum zur Verfügung stehen, um eine entsprechende Gelenkwelle vom Getriebe zum Versorgungsaggregat zu führen.

Schließlich ist ein Versorgungsaggregat üblicherweise mit einem oder mehreren Schalldämpfern versehen, vorzugsweise einem vorgeschalteten Ansaugschalldämpfer und einem nachgeschalteten Druckschalldämpfer. Diese Schalldämpfer haben die Aufgabe, den im Versorgungsaggregat entstehenden und über das Arbeitsfluid, beispielsweise die Luft, transportierten Schall möglichst zu verringern. Bei der Anordnung eines Versorgungsaggregats muss also auch der Raum für Schalldämpfer und einen entsprechenden Fluidfilter, beispielsweise Luftfilter, der in der Regel zwischen dem Ansaugschalldämpfer und dem Versorgungsaggregat angeordnet ist, berücksichtigt werden.

Das Dokument GB 753,197 beispielsweise offenbart ein Kraftfahrzeug nach dem Oberbegriff des Anspruchs 1, das einen Kompressor und einen diesem Kompressor vorgeschalteten Filter aufweist.

Der Erfindung liegt daher das technische Problem zugrunde, eine Versorgungsaggregateanordnung gemäß dem Oberbegriff des Anspruchs 1 bereitzustellen, die Schalldämpfer aufweist und trotzdem möglichst platzsparend am Kraftfahrzeug angeordnet werden kann.

Dieses zuvor aufgezeigte technische Problem wird gemäß der Erfindung durch ein Kraftfahrzeug mit den Merkmalen des Anspruchs 1 gelöst.

Erfindungsgemäß ist erkannt worden, dass der Raum innerhalb des Chassis, also in dem Bereich, der nicht über den Fahrzeugrahmen des Chassis hinausgeht, nicht ungenutzt bleiben muss, wie dies im Stand der Technik üblich ist, sondern zum Anordnen des Versorgungsaggregats besonders geeignet ist. Wird also das Versorgungsaggregat innerhalb des vom Fahrzeugrahmen begrenzten Bereichs angeordnet, so dass es also nicht seitlich über den Fahrzeugrahmen hinausragt, dann ist der Raum außerhalb des Chassis, also der Raum zwischen dem jeweiligen Vorder- und Hinterrad, vollständig für zusätzliche Kraftstofftanks oder zusätzlichen Stauraum nutzbar. Das Versorgungsaggregat kann sich in dem Raum oberhalb und insbesondere unterhalb des Chassis erstrecken und diesen Raum ausfüllen, der ebenfalls im Stand der Technik nicht genutzt worden ist.

Entsprechend ist es auch vorteilhaft, die mit dem Versorgungsaggregat verbundenen Schalldämpfer ebenfalls platzsparend innerhalb des Chassis anzuordnen. So wird ein Ansaugschalldämpfer mit Gehäuse, der einem saugseitigen Eingang des Arbeitsfluids des Versorgungsaggregats vorgeschaltet ist, und/oder ein Druckschalldämpfer mit Gehäuse, der einem druckseitigen Ausgang des Arbeitsfluids des Versorgungsaggregats nachgeschaltet ist, innerhalb des vom Fahrzeugrahmen begrenzten Bereichs angeordnet, also derart, dass der jeweilige Schalldämpfer nicht seitlich über den Fahrzeugrahmen des Chassis hinausragt.

Erfindungsgemäß wird damit eine Lösung geschaffen, mit der nachhaltig ein kostengünstiger und technisch stabiler Betrieb bei gleichzeitig verringertem Eigengewicht und erhöhter Nutzlast von Kraftfahrzeugen, insbesondere von Lastkraftwagen, ermöglicht wird.

Das Versorgungsaggregat, bei dem es sich beispielsweise um einen Kompressor wie einen Schraubenkompressor, insbesondere mit einem Fördervolumen von 400-1000 m³/h, handeln kann, kann beispielsweise mit dem Fahrzeugrahmen verbunden sein über einen am Fahrzeugrahmen befestigten Träger, der insbesondere durch eine Kompressoraufnahme, z.B. eine Stahlplatte, gebildet ist. Das Versorgungsaggregat kann aber auch unmittelbar mit dem Fahrzeugrahmen verbunden sein.

Auch der Ansaugschalldämpfer und/oder der Druckschalldämpfer kann unmittelbar am Fahrzeugrahmen befestigt sein. Dann kann der Schalldämpfer gleichzeitig Träger für die übrigen Bestandteile der Versorgungsaggregateanordnung sein, insbesondere für das Versorgungsaggregat und/oder den anderen Schalldämpfer, so dass ein zusätzlicher, am Fahrzeugrahmen befestigter Träger wie eine Kompressoraufnahme nicht unbedingt notwendig wäre. Dennoch kann zusätzlich, um die Stabilität zu erhöhen, ein solcher zusätzlicher Träger vorgesehen sein.

Der Fahrzeugrahmen des Chassis kann ein U-Profil, wobei die offene Seite zur Chassis-Innenseite gerichtet ist, oder ein T- oder Rohrprofil aufweisen.

Wenn der Fahrzeugrahmen des Chassis ein U-Profil, wobei die offene Seite zur Chassis-Innenseite gerichtet ist, oder ein T-Profil aufweist, kann zumindest ein Teil des Ansaugschalldämpfers und/oder des Druckschalldämpfers innerhalb des Profils angeordnet sein. Vorzugsweise ist dies der Druckschalldämpfer. Das Versorgungsaggregat kann dann unmittelbar darunter angeordnet sein. Dies führt zu einer optimalen Raumausnutzung, die sogar noch weiter verbessert werden kann, indem der Schalldämpfer das U- oder T-Profil im Querschnitt vollständig ausfüllt, so dass das Volumen des Profils ebenfalls nicht ungenutzt bleibt. Eine entsprechende Raumausnutzung ist auch bei einem Rohrprofil denkbar, wenn zur Chassis-Innenseite gerichtete Öffnungen darin vorgesehen sind.

Gemäß einer bevorzugten Ausführungsform der vorliegenden Erfindung ist der Ansaugschalldämpfer unmittelbar an den saugseitigen Eingang des Versorgungsaggregats und/oder der Druckschalldämpfer unmittelbar an den druckseitigen Ausgang des Versorgungsaggregats angeflanscht. Eine solche Bauweise ist nicht nur besonders platzsparend, sondern das unmittelbare Anflanschen führt auch zu einer wesentlichen Reduzierung der Geräusche, da der Schall keine Möglichkeit hat, zwischen dem Versorgungsaggregat und dem Schalldämpfer auszutreten.

Durch die vorstehend beschriebene Anordnung ist auch genügend Raum im Chassis vorhanden, um eine zum Versorgungsaggregateantrieb gehörende Gelenkwelle von einem Nebenabtrieb des Kraftfahrzeuggetriebes zum Versorgungsaggregat zu führen. Dabei ist vorzugsweise das Versorgungsaggregat zwischen einer mit dem Hauptabtrieb des Getriebes verbundenen Hauptwelle und dem Fahrzeugrahmen, insbesondere mittig dazwischen, angeordnet.

Die zweite Lehre der vorliegenden Erfindung betrifft einen Ansaugschalldämpfer mit einem Gehäuse, der dem saugseitigen Eingang eines Versorgungsaggregats vorgeschaltet sein kann, wobei in das Ansaugschalldämpfergehäuse ein Fluidfilter, insbesondere ein Luftfilter, integriert ist. Unabhängig vom Vorhandensein eines integrierten Luftfilters kann gemäß der zweiten Lehre der vorliegenden Erfindung im Innern des Ansaugschalldämpfergehäuses ein Prallkörper, vorzugsweise zwei Prallkörper, angeordnet sein.

Mit einem integrierten Fluidfilter kann das Arbeitsfluid vor dem Einströmen in das Versorgungsaggregat gefiltert werden. Dies führt zu einer besonders kompakten Bauweise der Versorgungsaggregateanordnung, da kein Raum mehr für ein separates Luftfiltergehäuse beansprucht wird. Auch die Herstellungskosten werden durch Wegfall eines zusätzlichen Gehäuses für den Filter verringert. Schließlich führt diese Bauweise auch zu einer weiteren Geräuschreduktion, da der Ansaugschalldämpfer unmittelbar an das Versorgungsaggregat angeschlossen werden kann. Bei dem Filter handelt es sich vorzugsweise um einen Papierfilter oder einen Baumwollfilter.

Die Prallkörper, bei denen es sich beispielsweise um ein Reflektorblech handeln kann, sorgen für eine besonders schallreduzierende Strömung des den Schalldämpfer durchströmenden Fluids. Der Effekt kann dadurch noch verstärkt werden, dass der Ansaugschalldämpfer einen Einlass und einen Auslass aufweist, wobei die dazugehörige Einlassöffnung und Auslassöffnung jeweils an gegenüberliegenden Seiten des Ansaugschalldämpfergehäuses, insbesondere zueinander versetzt, angeordnet sind.

Vorzugsweise ist ein Prallkörper in Strömungsrichtung hinter dem Ansaugschalldämpfereinlass, insbesondere in einem Abstand von 30 bis 40 mm, vorzugsweise von 36 mm, angeordnet, wobei der Prallkörper derart geformt sein kann, dass die Strömung des einströmenden Arbeitsfluids hinter dem Einlass um 80 bis 100°, insbesondere um 90°, in Richtung einer Seitenwand des Ansaugschalldämpfergehäuses umgelenkt wird.

Es kann auch ein Prallkörper in Strömungsrichtung vor dem Ansaugschalldämpferauslass, insbesondere in einem Abstand von 40 bis 60 mm, vorzugsweise von 48 mm, angeordnet sein. Der Prallkörper kann derart geformt sein, dass die Strömung des Arbeitsfluids vor dem Auslass zunächst in zwei Teilströme getrennt wird, die jeweils in einem Winkel von 80 bis 100°, insbesondere von 90°, zur Ausströmrichtung verlaufen und unmittelbar vor dem Auslass wieder zusammengeführt werden. Vorteilhafterweise haben der bzw. die Prallkörper, beispielsweise die zuvor beschriebenen Reflektorbleche, eine Stärke von 4 bis 8 mm, insbesondere von 6 mm. Dies alles führt zu einer besonders guten Schallreduktion bei gleichzeitig kompakter Bauweise.

Als besonders geeignet hat sich eine Ausführungsform des Ansaugschalldämpfers herausgestellt, bei der die Einlassöffnung einen rechteckigen Querschnitt hat, der vorzugsweise eine Breite von 60 bis 80 mm, vorzugsweise von 70 mm, und eine Länge von 200 bis 250 mm, vorzugsweise von 230 mm, hat.

Die Auslassöffnung kann beispielsweise einen runden Querschnitt haben, vorzugsweise mit einem Durchmesser von 90 bis 110 mm, vorzugsweise von 100 mm. Aus Platzgründen sollte das Ansaugschalldämpfergehäuse im wesentlichen eine Breite von 250 bis 300 mm, insbesondere von 280 mm, eine Länge von 340 bis 420 mm, insbesondere von 380 mm, und eine Tiefe von 200 bis 250 mm, insbesondere von 230 mm, haben und vorzugsweise eine Materialstärke von mindestens 8 mm, insbesondere von mindestens 10 mm, aufweisen. Dadurch wird gleichzeitig eine gute Schalldämpfung erreicht.

Zur einfacheren Montage oder Reparatur kann das Ansaugschalldämpfergehäuse aus einer ersten Gehäusehälfte und einer zweiten Gehäusehälfte zusammengesetzt sein. Die erste Gehäusehälfte, in der vorzugsweise der Ansaugschalldämpfereinlass angeordnet ist, hat dann beispielsweise eine Breite von 250 bis 300 mm, insbesondree von 280 mm, eine Länge von 340 bis 420 mm, insbesondere von 380 mm, und eine Tiefe von 80 bis 110 mm, insbesondere 96 mm, und die zweite Gehäusehälfte, in der der Ansaugschalldämpferauslass angeordnet sein kann, eine Breite von 250 bis 300 mm, insbesondere von 280 mm, eine Länge von 340 bis 420 mm, insbesondere von 380 mm, und eine Tiefe von 110 bis 150 mm, insbesondere von 135 mm.

Der vorangehend gemäß der zweiten Lehre der vorliegenden Erfindung beschriebene Ansaugschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Ansaugschalldämpfer ist aber nicht nur für die zuvor beschriebene Versorgungsaggregateanordnung geeignet, sondern kann auch unabhängig davon eingesetzt werden.

Die dritte Lehre der vorliegenden Erfindung betrifft einen Druckschalldämpfer mit einem Gehäuse, der einem druckseitigen Ausgang eines Versorgungsaggregats nachgeschaltet sein kann, wobei das Gehäuse einen Einlass bestehend aus einer Einlassöffnung und einem Einlasskanal aufweist, wobei unmittelbar hinter der Einlassöffnung eine Verengung des Querschnitts gefolgt von einer Erweiterung des Querschnitts des Einlasskanals vorgesehen ist. Mit anderen Worten, unmittelbar hinter der Einlassöffnung ist erfindungsgemäß eine Venturi-Düse angeordnet. Der Fluidstrom bzw. Luftstrom, der den Schall trägt, hat dadurch weniger Kontakt mit der Innenwand des Einlasskanals. Die Folge ist, dass weniger Körperschall entsteht, weil auch der Schall weniger mit der Wand in Kontakt kommt, die Wand also weniger Schall überträgt.

Dabei ist es von besonderem Vorteil, wenn die Verengung durch einen an der Innenwand des Einlasskanals umlaufenden Wulst gebildet ist, der vorzugsweise einen halbkreisförmigen Querschnitt, beispielsweise mit einem Radius von 4 bis 8 mm, insbesondere von 6 mm, hat. Die Verengung sollte derart ausgebildet sein, dass der Querschnitt des Einlasskanals im Bereich der Verengung mindestens 25%, vorzugsweise mindestens 30%, kleiner als der Querschnitt der Einlassöffnung ist. Ferner sollte die Erweiterung derart ausgebildet sein, dass der Querschnitt des Einlasskanals im Bereich der Erweiterung mindestens 50%, vorzugsweise mindestens 60%, größer als der Querschnitt im Bereich der Verengung ist.

Vorzugsweise hat der Einlasskanal im Bereich der Erweiterung, also nach der Verengung, einen größeren Querschnitt als die Einlassöffnung. Haben Einlassöffnung und Einlasskanal beispielsweise einen runden Querschnitt, dann hat vorzugsweise die Einlassöffnung einen Durchmesser von 60 bis 80 mm, insbesondere von 70 mm, der Einlasskanal im Bereich der Verengung einen Durchmesser von 45 bis 65 mm, insbesondere von 55 mm, und der Einlasskanal im Bereich der Erweiterung einen Durchmesser von 65 bis 85 mm, insbesondere von 74 mm.

Gemäß einer bevorzugten Ausführungsform hat der Druckschalldämpfer einen Einlasskanal mit einer Umlenkzone, in der das Arbeitsfluid, beispielsweise die Luft, um vorzugsweise 80 bis 100°, insbesondere um 90°, umgelenkt wird. An den Einlasskanal kann sich ein Zentralkanal anschließen, der ebenfalls eine oder mehrere Umlenkzonen, die jeweils durch einen Knick im Verlauf des Zentralkanals gebildet sein können, aufweist. Im Zentralkanal sind dabei auch eine oder mehrere Ruhezonen vorgesehen, die vorzugsweise durch einen Bereich mit einem erweiterten Querschnitt gebildet sind.

Der vorangehend gemäß der dritten Lehre der vorliegenden Erfindung beschriebene Druckschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Druckschalldämpfer ist aber nicht nur für die zuvor beschriebene Versorgungsaggregateanordnung geeignet, sondern kann auch unabhängig davon eingesetzt werden.

Die vierte Lehre der vorliegenden Erfindung betrifft einen Druckschalldämpfer mit einem Gehäuse, der einem druckseitigen Ausgang eines Versorgungsaggregats nachgeschaltet sein kann, wobei im Druckschalldämpfer ein Prallkörper vorgesehen, der senkrecht zur Strömungsrichtung angeordnet ist und in Strömungsrichtung mehrere Durchlässe aufweist. Der Prallkörper ist dabei vorzugsweise im Zentralkanal angeordnet, kann aber auch an anderer Stelle des Druckschalldämpfers vorgesehen sein. Ein solcher Prallkörper, der vorzugsweise ein Prallblech ist, führt zu einer hohen Schallvernichtung bei niedrigem Druckverlust.

Die äußeren Abmessungen des Prallkörpers sollten dabei den inneren Abmessungen des Kanals, in dem dieser angeordnet ist, entsprechen, so dass die Arbeitsfluidströmung ausschließlich durch die Durchlässe im Prallkörper in Richtung Auslass strömen kann. Als besonders geeignet hat sich ein Prallkörper mit einem quadratischen Querschnitt erwiesen, der dementsprechend in einem quadratischen Kanal angeordnet ist.

Vorzugsweise hat der Prallkörper fünf Durchlässe, wobei vorzugsweise ein Durchlass mittig zwischen vier äußeren Durchlässen angeordnet ist. Die vier äußeren Durchlässe sollten dabei den gleichen Abstand zueinander und insbesondere den gleichen Querschnitt haben. Der Querschnitt des mittigen Durchlasses sollte kleiner als der Querschnitt der äußeren Durchlässe sein. Beispielsweise sollte der Querschnitt der äußeren Durchlässe mindestens doppelt so groß wie der Querschnitt des mittigen Durchlasses sein. Als optimal hat sich ein Querschnitt für den mittigen Durchlass von 600 bis 800 mm², insbesondere 700 mm², erwiesen.

Gemäß einer vorteilhaften Ausgestaltung ist der Querschnitt des mittigen Durchlasses rund und der Querschnitt der äußeren Durchlässe jeweils halbkreisförmig. Dabei ist es von Vorteil, wenn der Radius der äußeren Durchlässe mindestens doppelt so groß wie der Radius des mittigen Durchlasses ist, der beispielsweise 10 bis 20 mm, insbesondere 15 mm, beträgt. Der Abstand zwischen den jeweils benachbarten äußeren Durchlässen kann zwischen 40 und 50 mm liegen und beträgt vorzugsweise 42 mm. Der Abstand zwischen dem mittigen Durchlass und den äußeren Durchlässen kann zwischen 20 und 30 mm liegen und beträgt vorzugsweise 27 mm. Die Dicke des Prallkörpers bzw. Prallblechs sollte, in Strömungsrichtung gesehen, zwischen 5 und 15 mm liegen und vorzugsweise 11 mm betragen.

Innerhalb des jeweiligen Kanals, in dem der Prallkörper vorgesehen ist, insbesondere also innerhalb des Zentralkanals, ist der Prallkörper vorteilhafterweise in einer Kammer mit einer Einlassöffnung und einer Auslassöffnung so angeordnet, dass er mittig zwischen der Einlassöffnung und der Auslassöffnung positioniert ist. Beispielsweise kann der Abstand zwischen dem Prallkörper und der Einlassöffnung der Kammer zwischen 30 und 50 mm, insbesondere 38 mm, betragen. Dies hat sich als besonders strömungsgünstig erwiesen.

Schließlich ist auch besonders günstig für die Strömungsverhältnisse und für die Schallreduktion, wenn der Durchmesser bzw. doppelte Radius des mittigen Durchlasses kleiner als der Abstand des Prallkörpers zur Einlassöffnung der Kammer ist und wiederum der Abstand des Prallkörpers zur Einlassöffnung kleiner als der Durchmesser bzw. doppelte Radius der äußeren Durchlässe ist.

Der vorangehend gemäß der vierten Lehre der vorliegenden Erfindung beschriebene Druckschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Druckschalldämpfer ist aber nicht nur für die zuvor beschriebene Versorgungsaggregateanordnung geeignet, sondern kann auch unabhängig davon eingesetzt werden.

Die fünfte Lehre der vorliegenden Erfindung betrifft einen Auslass eines Druckschalldämpfers, der dem druckseitigen Ausgang eines Versorgungsaggregats nachgeschaltet sein kann, wobei der Auslass einen gegenüber dem übrigen Teil des Druckschalldämpfers drehbaren Kopf aufweist, insbesondere einen um 360° drehbaren Kopf, mit einem Auslasskanal und mindestens einer Auslassöffnung. Durch einen solchen drehbaren Kopf wird eine hohe Flexibilität betreffend die Anschlussmöglichkeiten des Druckschalldämpfers bei gleichzeitig äußerst kompakter Bauweise erreicht.

Vorzugsweise ist die Auslassöffnung winkelig zum Auslasskanal angeordnet, derart, dass das in den Kopf einströmende Arbeitsfluid unmittelbar vor der Auslassöffnung umgelenkt wird. Damit wird eine letzte Umlenkzone in dem Druckschalldämpfer geschaffen. Als besonders geeignet hat sich eine Umlenkung um 80 bis 100°, insbesondere um 90°, herausgestellt, das heißt, die Auslassöffnung ist dann in einem Winkel von 80 bis 100°, insbesondere von 90°, zum Auslasskanal angeordnet.

Es kann auch vorgesehen sein, dass in dem als drehbarer Kopf ausgebildeten Auslass eine weitere Auslassöffnung vorgesehen ist, die in unmittelbarer Verlängerung des Auslasskanals, das heißt in Strömungsrichtung, angeordnet ist. Auf diese Weise bestehen eine Vielzahl von Anschlussmöglichkeiten an den Auslass. Dieser kann nahezu jeder Gegebenheit ohne größeren Aufwand angepasst werden. Abhängig davon, welche der beiden Auslassöffnungen letztlich verwendet wird, kann die jeweils andere Auslassöffnung durch einen Blindstopfen verschlossen sein.

Der vorangehend gemäß der fünften Lehre der vorliegenden Erfindung beschriebene Druckschalldämpfer ist besonders als Bestandteil der erfindungsgemäßen Versorgungsaggregateanordnung geeignet, da auf diese Weise eine platzsparende Bauweise mit einer optimalen Schallreduzierung ermöglicht wird. Der zuvor beschriebene Druckschalldämpfer ist aber nicht nur für die zuvor beschriebene Versorgungsaggregateanordnung geeignet, sondern kann auch unabhängig davon eingesetzt werden.

Im folgenden wird die Erfindung nur beispielhaft anhand der Zeichnungen beschrieben. Dabei zeigt
- Fig. 1a) bis c): eine schematische Darstellung eines Kraftfahrzeugs mit Versorgungsaggregateanordnung gemäß der vorliegenden Erfindung,
- Fig. 2a) bis d): eine Schnittansicht eines zweiteiligen Ansaugschalldämpfers
- Fig. 3: eine Schnittansicht eines erfindungsgemäßen Druckschalldämpfers für eine Versorgungsaggregateanordnung,
- Fig. 4: eine Schnittansicht eines Druckschalldämpfereinlasses
- Fig. 5: eine Schnittansicht einer Kammer eines Druckschalldämpferkanals mit einem Prallblech und
- Fig. 6: eine Teilschnittansicht eines Druckschalldämpferauslasses.

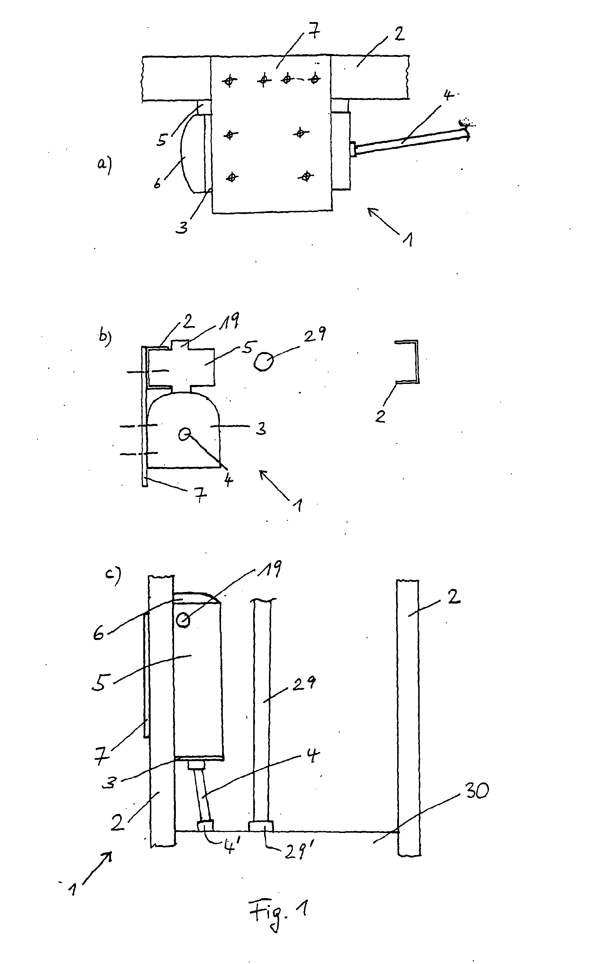

Fig. 1a) zeigt eine Versorgungsaggregateanordnung 1 für einen Lastkraftwagen umfassend ein Chassis 2 mit einem Fahrzeugrahmen, ein Versorgungsaggregat 3 in Form eines Kompressors und einen Versorgungsaggregateantrieb 4 mit einer Gelenkwelle, die mit einem Nebenabtrieb 4' des Fahrzeuggetriebes 30 verbunden ist. Dem Versorgungsaggregat 3 ist ein Druckschalldämpfer 5 nachgeschaltet, welcher oberhalb des Versorgungsaggregats 3 mit dem Chassis 2 fest verschraubt ist. Dem Versorgungsaggregat 3 ist ferner ein Ansaugschalldämpfer 6 vorgeschaltet über den gefilterte Luft eingeleitet wird. Als Träger des Versorgungsaggregats 3 dient eine Kompressoraufnahme 7, die fest mit dem Chassis 2 verschraubt ist.

In Fig. 1b) und c) ist erkennbar, dass weder das Versorgungsaggregat 3 noch die beiden Schalldämpfer 5 und 6 seitlich über das Chassis 2 hinausragen. So kann der Raum außerhalb des Chassis 2 für andere Zwecke, beispielsweise für separate Kraftstofftanks, genutzt werden.

Der Fahrzeugrahmen des Chassis 2 weist im vorliegenden Fall ein U-Profil auf, wobei die offene Seite zur Chassis-Innenseite gerichtet ist. Dabei wird das Volumen des U-Profils dadurch optimal ausgenutzt, dass der Druckschalldämpfer 5 das U-Profil im Querschnitt vollständig ausfüllt.
Fig. 1c) verdeutlicht außerdem, wie der Versorgungsaggregateantrieb funktioniert. So weist das Fahrzeuggetriebe einen Hauptabtrieb 29' auf, der die angetriebenen Räder über eine Hauptwelle 29 antreibt, sowie einen Nebenabtrieb 4', der über eine Gelenkwelle auf das Versorgungsaggregat 3 wirkt. Im dargestellten Fall ist das Versorgungsaggregat zwischen der Hauptwelle 29 und dem Fahrzeugrahmen des Chassis 2 angeordnet.

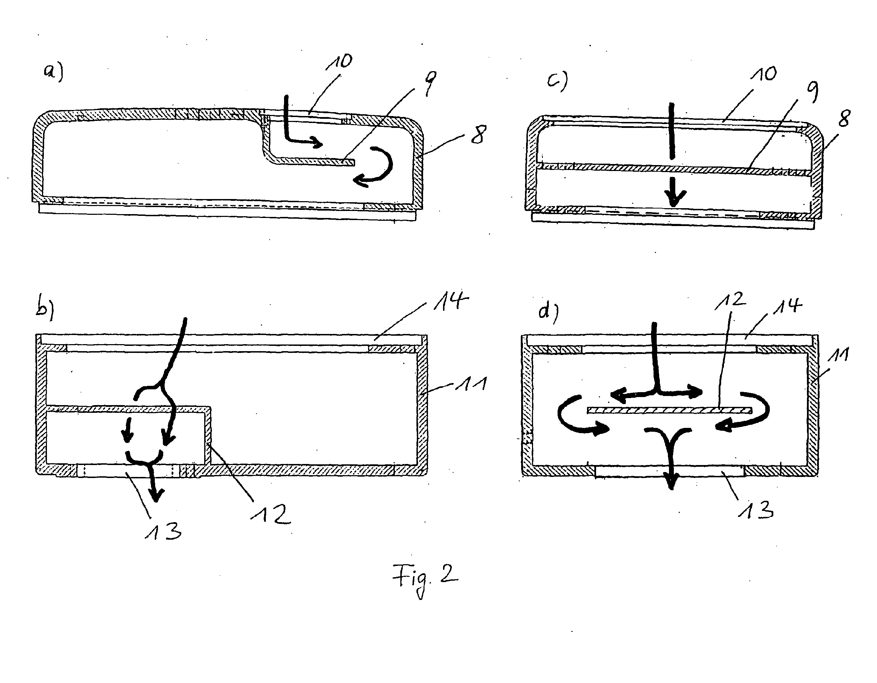

In Fig. 2a) ist eine erste Gehäusehälfte 8 eines Ansaugschalldämpfergehäuses mit einem ersten Prallkörper 9 in Form eines Reflektorbleches im Bereich der Einlassöffnung 10 dargestellt. Fig. 2c) zeigt eine Schnittansicht derselben Gehäusehälfte 8, die gegenüber der Schnittansicht aus Fig. 2a) um 90° gedreht ist.
Fig. 2b) zeigt die entsprechende zweite Gehäusehälfte 13, die einen zweiten Prallkörper 12 ebenfalls in Form eines Reflektorbleches im Bereich der Auslassöffnung 13 aufweist.
Fig. 2d) ist eine Schnittansicht derselben dieselbe Gehäusehälfte 11, wobei die Ansicht gegenüber der aus Fig. 2b) um 90° gedreht ist.

Ein Luftfilter 14, beispielsweise ein Baumwollfilter, kann im zusammengesetzten Zustand der beiden Gehäusehälften 8 und 11 zwischen diesen angeordnet werden.

Die Luftströmung durch die beiden Gehäusehälften 8 und 11 entlang der Prallkörper 9 und 12 ist durch Pfeile dargestellt. Der erste Prallkörper 9 ist in einem Abstand von 36 mm derart hinter dem Ansaugschalldämpfer 6 angeordnet, dass die Strömung des einströmenden Arbeitsfluids hinter dem Einlass 10 um 90° in Richtung der rechten Seitenwand der ersten Gehäusehälfte 8 umgelenkt wird. Nachdem das Arbeitsfluid anschließend den Filter 14 passiert hat, trifft dieses auf den zweiten Prallkörper 12. Der Prallkörper 12 ist derart geformt, dass die Strömung des Arbeitsfluids zunächst in zwei Teilströme getrennt wird, die jeweils in einem Winkel von 90° zur Ausströmrichtung verlaufen und unmittelbar vor dem Auslass wieder zusammengeführt werden. Der Prallkörper 12 ist dabei in einem Abstand von 48 mm vom Auslass 13 angeordnet.

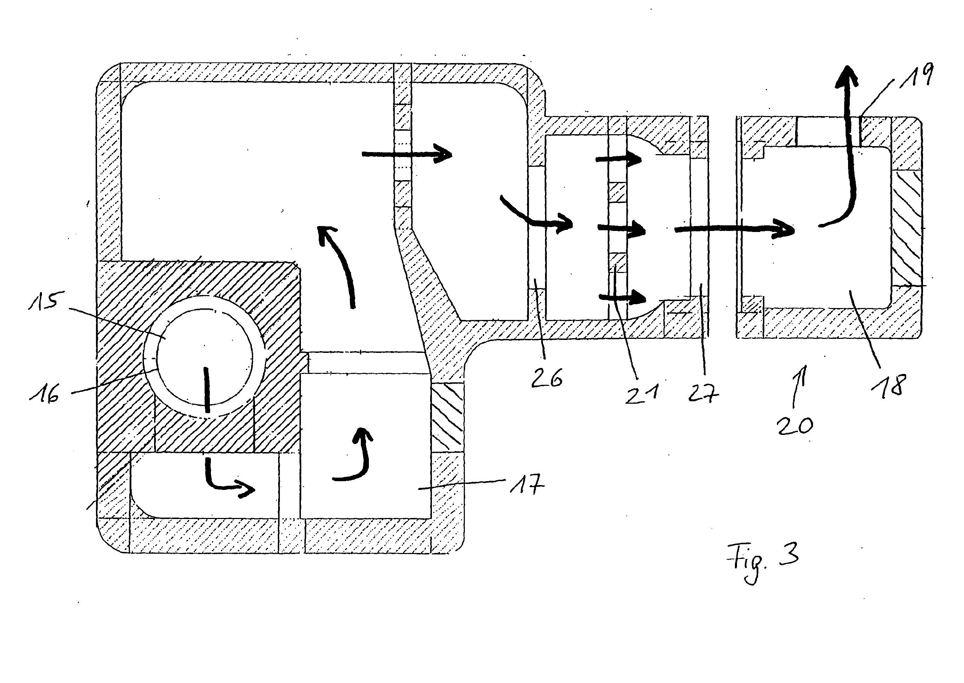

Fig. 3 zeigt eine Schnittansicht eines Druckschalldämpfers, der in einer Versorgungsaggregateanordnung einem Kompressor nachgeschaltet werden kann. Der Strömungsverlauf ist dabei durch Pfeile dargestellt. Durch eine Einlassöffnung 15 gelangt das einströmende Arbeitsfluid, hier die Luft, zunächst in einen Einlasskanal 16 und von dort in einen Zentralkanal 17, der mehrere Umlenkzonen und Ruhezonen umfasst, und schließlich in einen Auslasskanal 18 zur Auslassöffnung 19 des Schalldämpfers. Der Auslasskanal 18 und die Auslassöffnung 19 sind dabei Bestandteil eines drehbaren Druckschalldämpferkopfes 20, der in beliebiger Art und Weise zum übrigen Teil des Schalldämpfers angeordnet und befestigt werden kann. Im hinteren Teil des Zentralkanals 17 ist ferner ein Prallkörper 21 dargestellt, welcher den Luftstrom in mehrere Teilströme teilt.

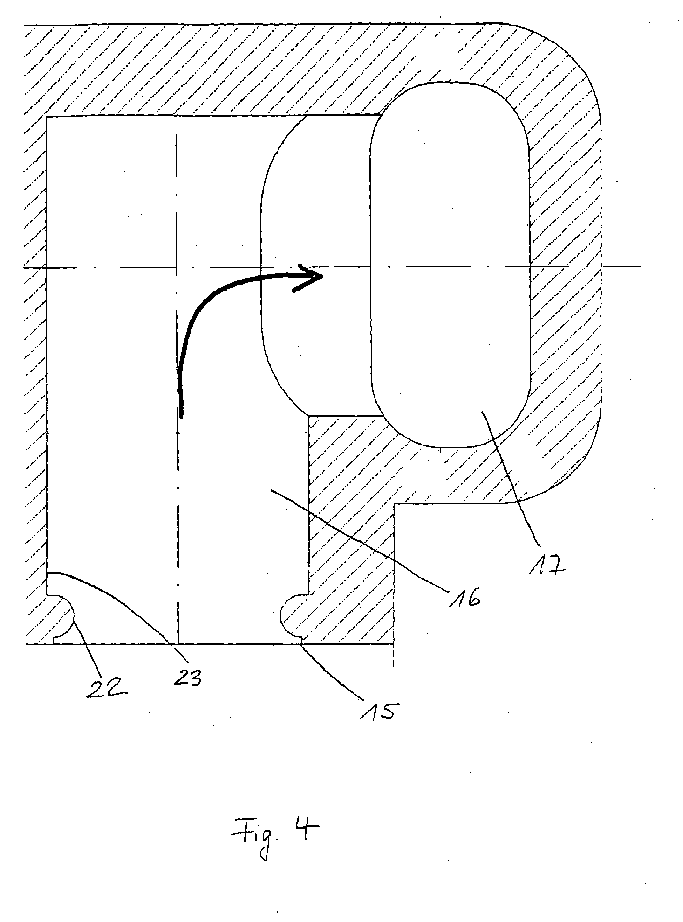

Die wesentlichen Details dieses Druckschalldämpfers werden nun im folgenden anhand der Figuren 4 bis 6 kurz erläutert.

So ist in Fig. 4 eine Schnittansicht eines Druckschalldämpfereinlasses dargestellt, welcher aus einer Einlassöffnung 15 und einem Einlasskanal 16 besteht. Unmittelbar hinter der Einlassöffnung 15 weist der Einlasskanal 16 eine Verengung 22 auf, die durch einen an der Innenwand des Einlasskanals 16 umlaufenden Wulst gebildet wird. Unmittelbar hinter der Verengung 22 schließt sich eine Erweiterung 23 des Einlasskanals 16 an. Der umlaufende Wulst, der einen Radius von 36 mm hat, hat den Vorteil, dass das einströmende Arbeitsfluid, das den Schall transportiert, möglichst wenig mit der Innenwand des Einlasskanals 16 in Berührung kommt, um dadurch den Körperschall zu reduzieren. Nach Passieren einer Umlenkzone, in der die Strömung um 90° umgelenkt wird, wird diese in einen sich an den Einlasskanal 16 anschließenden Zentralkanal 17 geleitet.

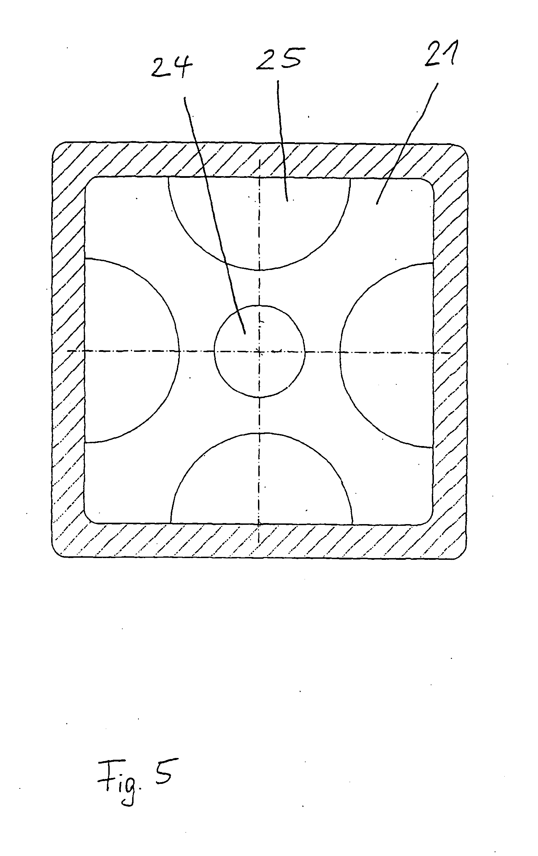

Fig. 5 zeigt eine Schnittansicht einer Kammer im Endbereich des Zentralkanals 17 des Druckschalldämpfers, wobei in dieser Kammer ein weiterer Prallkörper 21 geformt angeordnet ist. Der Prallkörper 21 weist fünf Durchlässe auf, wobei ein Durchlass 24 mittig zwischen vier äußeren Durchlässen 25 angeordnet ist. Die vier äußeren Durchlässe 25 sind dabei halbkreisförmig geformt, wobei der Radius des Halbkreises 30 mm und der Durchmesser folglich 60 mm beträgt. Der mittige Durchlass 24 hat einen Radius von 15 mm und folglich einen Durchmesser von 30 mm. Der Abstand zwischen den jeweils benachbarten äußeren Durchlässen 25 beträgt 44 mm und der Abstand zwischen dem mittigen Durchlass und jedem äußeren Durchlass 27 mm.

Der Prallkörper 21 ist dabei von dem Kammereinlass 26 und dem Kammerauslass 27 jeweils 38 mm entfernt, wie dies Fig. 3 zu entnehmen ist. Mit anderen Worten, der Durchmesser bzw. doppelte Radius des mittigen Durchlasses 24 ist kleiner als der Abstand des Prallkörpers 21 zur Einlassöffnung 26 der Kammer und der Abstand des Prallkörpers 21 zur Einlassöffnung 26 ist wiederum kleiner als der Durchmesser bzw. doppelte Radius der äußeren Durchlässe 25.

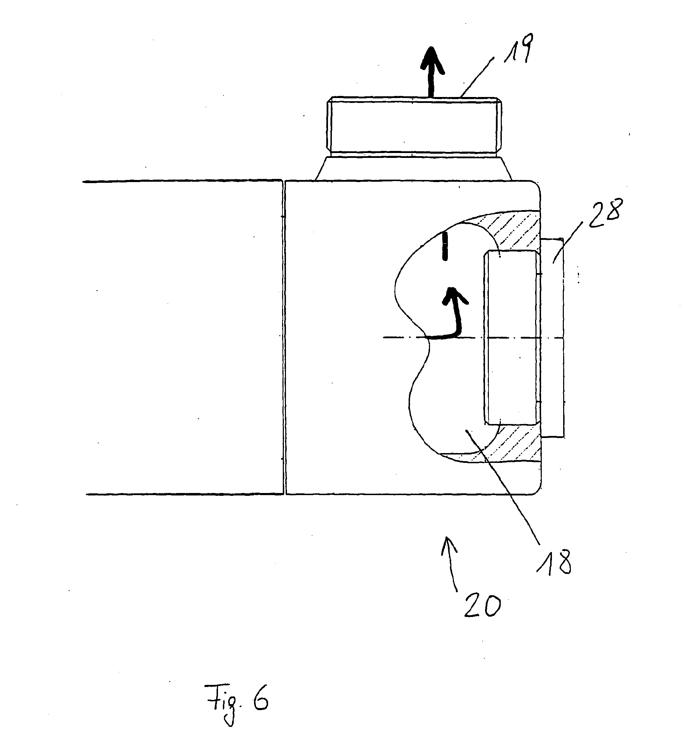

Fig. 6 zeigt schließlich eine Teilschnittansicht eines Ausführungsbeispiels eines Druckschalldämpferauslasses, der von einem beweglichen Kopf 20 gebildet wird. Die Strömung des durch den Auslasskanal 18 strömenden Arbeitsfluids, wiederum dargestellt durch Pfeile, wird unmittelbar vor dem Auslass 19 ein letztes Mal um einen Winkel von 90° umgelenkt. Im dargestellten Fall erfolgt die Umlenkung über einen im Bereich der Umlenkzone befindlichen Blindstopfen 28. Es ist auch denkbar, den Blindstopfen 28 zu entfernen und auf die bisherige Auslassöffnung 19 zu setzen, um dadurch eine alternative Auslassöffnung zu schaffen, die dann in Strömungsrichtung angeordnet wäre, also in unmittelbarer Verlängerung zum Auslasskanal 18.

## Patentansprüche

1. Kraftfahrzeug, insbesondere Lastkraftwagen, mit einem Getriebe (30) und einer Versorgungsaggregateanordnung,
- mit einem Chassis (2), das nach außen von einem Fahrzeugrahmen begrenzt ist,
- mit einem Versorgungsaggregat (3), das mit dem Fahrzeugrahmen verbunden ist, und
- mit einem Versorgungsaggregateantrieb (4),
- wobei das Versorgungsaggregat (3) innerhalb des vom Fahrzeugrahmen begrenzten Bereichs angeordnet ist, und
- wobei das Versorgungsaggregat (3) einen saugseitigen Eingang und einen druckseitigen Ausgang für ein Arbeitsfluid aufweist,
**dadurch gekennzeichnet,**
**dass** dem Eingang ein Ansaugschalldämpfer (6) mit einem Gehäuse (8, 11) vorgeschaltet und/oder dem Ausgang ein Druckschalldämpfer (5) mit einem Gehäuse nachgeschaltet ist, und wobei der Ansaugschalldämpfer (6) und/oder der Druckschalldämpfer (5) innerhalb des vom Fahrzeugrahmen begrenzten Bereichs angeordnet sind.

2. Kraftfahrzeug nach einem der vorangegangenen Ansprüche,
**dadurch gekennzeichnet,**
**dass** der Versorgungsaggregateantrieb (4) eine Gelenkwelle umfasst, die mit einem Nebenabtrieb (4') des Kraftfahrzeuggetriebes (30) verbunden ist.

3. Kraftfahrzeug nach einem der vorangegangenen Ansprüche,
**dadurch gekennzeichnet,**
**dass** das Versorgungsaggregat (3) ein Kompressor, vorzugsweise ein Schraubenkompressor, ist.

4. Kraftfahrzeug nach einem der vorangegangenen Ansprüche,
**dadurch gekennzeichnet,**
**dass** in das Ansaugschalldämpfergehäuse (8, 11) ein Fluidfilter, insbesondere ein Luftfilter (14), integriert ist.

5. Kraftfahrzeug nach einem der vorangegangenen Ansprüche,
**dadurch gekennzeichnet,**
**dass** mindestens ein Prallkörper (9, 12), vorzugsweise zwei Prallkörper (9, 12), im Innern des Ansaugschalldämpfergehäuses (8, 11) angeordnet ist.

6. Kraftfahrzeug nach einem der vorangegangenen Ansprüche,
**dadurch gekennzeichnet,**
**dass** der Druckschalldämpfer (5) in seinem Gehäuse einen Einlass hat, der aus einer Einlassöffnung (15) und einem Einlasskanal (16) besteht, wobei unmittelbar hinter der Einlassöffnung (15) eine Verengung (22) des Querschnitts gefolgt von einer Erweiterung (23) des Querschnitts des Einlasskanals (16) vorgesehen ist.

7. Kraftfahrzeug nach einem der vorangegangenen Ansprüche,
**dadurch gekennzeichnet,**
**dass** im Druckschalldämpfer (5) ein Prallkörper (21) vorgesehen ist, der senkrecht zur Strömungsrichtung, vorzugsweise im Zentralkanal (17), angeordnet ist und in Strömungsrichtung mehrere Durchlässe (24, 25) aufweist.

8. Kraftfahrzeug nach einem der vorangegangenen Ansprüche,
**dadurch gekennzeichnet,**
**dass** ein Auslass für den Druckschalldämpfer (5) vorgesehen ist, der einen gegenüber dem übrigen Teil des Druckschalldämpfers (5) drehbaren Kopf (20) mit einem Auslasskanal (18) und mindestens einer Auslassöffnung (19) aufweist.

9. Kraftfahrzeug nach Anspruch 8,
**dadurch gekennzeichnet,**
**dass** die Auslassöffnung (19) winkelig zum Auslasskanal (18) angeordnet ist, derart, dass das in den Kopf (20) einströmende Arbeitsfluid unmittelbar vor der Auslassöffnung (19) umgelenkt wird.

10. Kraftfahrzeug nach Anspruch 8 oder 9,
**dadurch gekennzeichnet,**
**dass** eine weitere Auslassöffnung vorgesehen ist, die in der Verlängerung des Auslasskanals (18) angeordnet ist.

## Claims

1. Motor vehicle, in particular utility motor vehicle, having a transmission (30) and having a supply unit arrangement,
- having a chassis (2) which is delimited in the outward direction by a vehicle frame,
- having a supply unit (3) which is connected to the vehicle frame, and
- having a supply unit drive (4),
- with the supply unit (3) being arranged within the region which is delimited by the vehicle frame, and
- with the supply unit (3) having a suction-side inlet and a pressure-side outlet for a working fluid,
**characterized**
**in that** a suction noise damper (6) having a housing (8, 11) is connected upstream of the inlet and/or a pressure noise damper (5) having a housing is connected downstream of the outlet, and with the suction noise damper (6) and/or the pressure noise damper (5) being arranged within the region which is delimited by the vehicle frame.

2. Motor vehicle according to one of the preceding claims,
**characterized**
**in that** the supply unit drive (4) comprises an articulated shaft which is connected to an auxiliary drive output (4') of the motor vehicle transmission (30).

3. Motor vehicle according to one of the preceding claims,
**characterized**
**in that** the supply unit (3) is a compressor, preferably a screw-type compressor.

4. Motor vehicle according to one of the preceding claims,
**characterized**
**in that** a fluid filter, in particular an air filter (14), is integrated into the suction noise damper housing (8, 11).

5. Motor vehicle according to one of the preceding claims,
**characterized**
**in that** at least one impact body (9, 12), preferably two impact bodies (9, 12), is arranged in the interior of the suction noise damper housing (8, 11).

6. Motor vehicle according to one of the preceding claims,
**characterized**
**in that** the pressure noise damper (5) has, in its housing, an inlet which is composed of an inlet opening (15) and an inlet duct (16), with a constriction (22) of the cross section followed by a widening (23) of the cross section of the inlet duct (16) being provided directly downstream of the inlet opening (15).

7. Motor vehicle according to one of the preceding claims,
**characterized**
**in that** an impact body (21) is provided in the pressure noise damper (5), which impact body (21) is arranged perpendicular to the flow direction, preferably in the central duct (17), and has a plurality of passages (24, 25) in the flow direction.

8. Motor vehicle according to one of the preceding claims,
**characterized**
**in that** an outlet for the pressure noise damper (5) is provided, which outlet has a head (20), which is rotatable relative to the remaining part of the pressure noise damper (5), with an outlet duct (18) and at least one outlet opening (19).

9. Motor vehicle according to Claim 8,
**characterized**
**in that** the outlet opening (19) is arranged at an angle with respect to the outlet duct (18), in such a way that the working fluid which flows into the head (20) is deflected directly upstream of the outlet opening (19).

10. Motor vehicle according to Claim 8 or 9,
**characterized in that** a further outlet opening is provided which is arranged as an extension of the outlet duct (18).

## Revendications

1. Véhicule automobile, notamment un véhicule utilitaire, comprenant une boîte de vitesses (30) et un agencement de groupe d'alimentation,
- comprenant un châssis (2) délimité vers l'extérieur par un cadre de véhicule,
- comprenant un groupe d'alimentation (3) relié au cadre du véhicule, et
- comprenant un entraînement (4) du groupe d'alimentation,
- le groupe d'alimentation (3) étant disposé à l'intérieur de la zone délimitée par le cadre du véhicule, et
- le groupe d'alimentation (3) comprenant une entrée côté aspiration et une sortie côté refoulement, pour du fluide de travail,
**caractérisé en ce**
**qu'**un silencieux d'aspiration (6) comprenant un boîtier (8, 11) est disposé en amont de l'entrée, et/ou un silencieux de refoulement (5) comprenant un boîtier est disposé en aval de la sortie, et où le silencieux d'aspiration (6) et/ou le silencieux de refoulement (5) est/sont disposé(s) à l'intérieur de la zone délimitée par le cadre du véhicule.

2. Véhicule automobile selon l'une des revendications précédentes,
**caractérisé en ce que**
l'entraînement (4) du groupe d'alimentation comprend un arbre articulé qui est relié à une prise de force (4') de la boîte de vitesses (30) du véhicule automobile.

3. Véhicule automobile selon l'une des revendications précédentes,
**caractérisé en ce que**
le groupe d'alimentation (3) est un compresseur, de préférence un compresseur à vis.

4. Véhicule automobile selon l'une des revendications précédentes,
**caractérisé en ce**
**qu'**un filtre à fluide, en particulier un filtre à air (14), est intégré dans le boîtier (8, 11) du silencieux d'aspiration.

5. Véhicule automobile selon l'une des revendications précédentes,
**caractérisé en ce**
**qu'**au moins un élément formant chicane (9, 12), de préférence deux éléments formant chicane (9, 12) est/sont disposé(s) à l'intérieur du boîtier (8, 11) du silencieux d'aspiration.

6. Véhicule automobile selon l'une des revendications précédentes,
**caractérisé en ce que**
le silencieux de refoulement (5) comporte une entrée dans son boîtier, qui est composée d'une ouverture d'admission (15) et d'un canal d'admission (16), une striction (22) de la section transversale étant agencée immédiatement après l'ouverture d'admission (15), suivie par un élargissement (23) de la section transversale du canal d'admission (16).

7. Véhicule automobile selon l'une des revendications précédentes,
**caractérisé en ce**
**qu'**un élément formant chicane (21) est prévu dans le silencieux de refoulement (5), élément formant chicane qui est disposé perpendiculairement à la direction d'écoulement, de préférence dans le canal central (17), et qui comprend plusieurs ouvertures de passage (24, 25).

8. Véhicule automobile selon l'une des revendications précédentes,
**caractérisé en ce**
**qu'**un échappement est prévu pour le silencieux de refoulement (5), échappement qui présente une tête (20) pouvant pivoter par rapport au reste du silencieux de refoulement (5), comprenant un canal d'échappement (18) et au moins une ouverture d'échappement (19).

9. Véhicule automobile selon la revendication 8,
**caractérisé en ce que**
l'ouverture d'échappement (19) est disposée à un angle par rapport au canal d'échappement (18), de telle sorte que le fluide de travail entrant dans la tête (20) soit dévié immédiatement avant l'ouverture d'échappement (19).

10. Véhicule automobile selon la revendication 8 ou 9,
**caractérisé en ce**
**qu'**une autre ouverture d'échappement est prévue, qui est disposée dans le prolongement du canal d'échappement (18).
